Europäisches Patentamt

European Patent Office

Office européen des brevets

(11) Publication number: **0 199 534**
**B1**

## EUROPEAN PATENT SPECIFICATION

(45) Date of publication of patent specification: **26.07.89**

(51) Int. Cl.[4]: **F 23 R 3/08,** F 23 R 3/00

(21) Application number: **86302834.6**

(22) Date of filing: **16.04.86**

(54) Liner structure for a gas turbine combustion chamber.

(30) Priority: **18.04.85 JP 82999/85**

(43) Date of publication of application:
**29.10.86 Bulletin 86/44**

(45) Publication of the grant of the patent:
**26.07.89 Bulletin 89/30**

(84) Designated Contracting States:
**DE FR GB IT SE**

(56) References cited:
**FR-A-1 508 224**
**FR-A-2 111 931**
**FR-A-2 519 412**

The file contains technical information
submitted after the application was filed and
not included in this specification

(73) Proprietor: **ISHIKAWAJIMA-HARIMA JUKOGYO KABUSHIKI KAISHA**
**2-1, Ote-machi 2-chome**
**Chiyoda-ku Tokyo 100 (JP)**

(72) Inventor: **Sato, Yukinori**
**No. 406-8-201, Kamifujisawa**
**Iruma-shi Saitama-ken (JP)**
Inventor: **Watanabe, Takeshi**
**No. 2-237-335, Nekabu**
**Ome-shi Tokyo-to (JP)**
Inventor: **Nikai, Isao 7-102 Okurayama Heim**
**No. 803-2, Mamedo-cho Kohoku-ku**
**Yokohama-shi Kanagawa-ken (JP)**
Inventor: **Watanabe, Kenji**
**No. 3-24-5, Azamino Midori-ku**
**Yokohama-shi Kanagawa-ken (JP)**

(74) Representative: **Jennings, Nigel Robin et al**
**KILBURN & STRODE 30 John Street**
**London WC1N 2DD (GB)**

**Description**

The present invention relates to a liner structure for a gas turbine combustion chamber or the like and is concerned with the cooling of such a liner structure. The invention is concerned with such a liner structure including two spaced liner walls between which, in use, cooling air flows, the space between the liner walls being divided into spaces of substantially rectangular section by partitions.

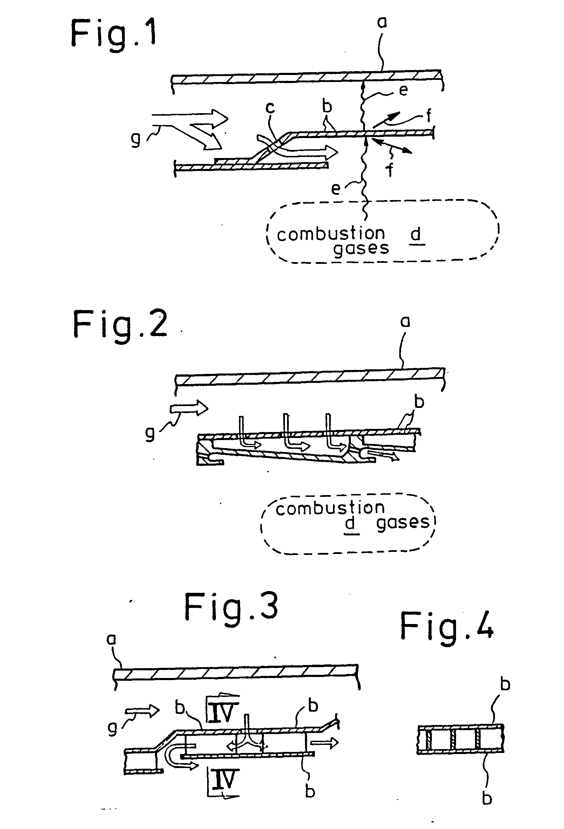

Examples of known cooled liner constructions for gas turbine combustion chamber or the like are illustrated in Figures 1 to 4 which are all diagrammatic scrap sectional elevations.

The construction of Figure 1 employs an air film cooling method and includes a combustion casing a within which is a liner wall b which encloses hot combustion gases d. An air hole c is formed in the liner wall b. The liner wall b is heated by radiant heat transfer e and convection heat transfer f. A cooling gas g from the discharge of a compressor forms a film of cooling air over the surface of the liner wall b which is thus prevented from becoming overheated.

The construction of Figure 2 employs an impingement plus air film cooling method in which the liner wall is positively cooled by the convection of the cooling air g.

The constructions of Figures 3 and 4 employ similar cooling methods to that of Figure 2 in that the liner wall b is positively cooled by the convection of the cooling air g.

The cooling method shown in Figure 1 has the disadvantage that is efficiency is low and the cooling air film is frequently broken due to disturbances in the cooling air and disturbances in the combustion gases to that it is difficult to achieve uniform cooling. The methods shown in figures 2, 3 and 4 also have the common problem that the cooling efficiency is low.

FR-A-2111931 discloses a liner structure for a gas turbine casing which comprises an interior and an exterior skin which are spaced from one another by axial ribs.

FR-A-1508224 discloses a heat exchanger comprising a plurality of circular section tubes through which hot gas flows. Helicoidal scrapers are axially movable in the tubes to prevent the build up of deposits that would otherwise inhibit heat transfer across the tube walls.

It is an object of the present invention to provide a liner structure for a gas turbine combustion, a jet engine afterburner or the like which may readily be cooled more efficiently than known structure.

According to the present invention a liner structure of the type referred to above is characterised in that each space accommodates a twisted or helical formation comprising a twisted rectangular tape or band whereby air flowing along the length of the space is caused to swirl.

One embodiment of the present invention includes a plurality of liner walls in partially overlapping relationship, each liner wall overlapping part of the length of one adjacent liner wall and being spaced from it, the space between each overlapping pair of liner walls being divided into spaces by partitions and that each space accommodates a twisted or helical formation comprising a twisted tape or band whereby air flowing along the length of the space is caused to swirl.

The partition walls between the or each pair of liner walls are preferably connected together and form part of a single plate or sheet. The spaces, which are preferably elongate and positioned side by side, are preferably of substantially rectangular section.

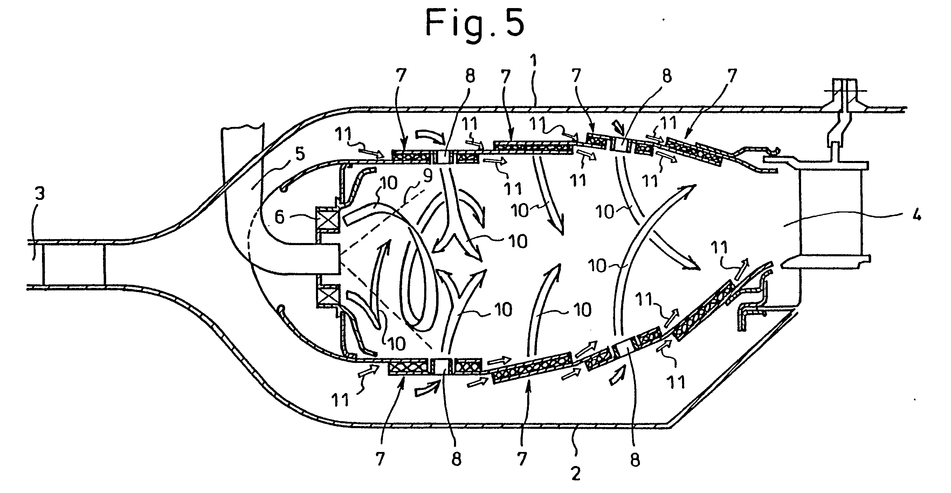

Further features, details and advantages of the present invention will be apparent from the following description of one preferred embodiment which is given by way of example with reference to Figures 5 to 9 of the accompanying drawings, in which:-

Figure 5 is a diagrammatic longitudinal sectional view of a gas turbine combustion chamber including a cooled liner structure in accordance with the present invention;

Figure 6 is a scrap sectional view of the liner wall on an enlarged scale;

Figure 7 is a scrap perspective view, partly broken away, of the liner structure and a partition wall;

Figure 8 is a view of a single twisted tape; and

Figure 9 is a graph illustrating the difference in cooling efficiency in a liner structure in accordance with the invention and a liner structure not in accordance with the invention.

The gas turbine combustion chamber includes an outer casing 1 and an inner casing 2 which together define a space which communicates with the outlet 3 of a compressor and a turbine inlet 4. Positioned within the chamber are one or more fuel nozzles 5 and air swirlers 6. Spaced from the casings are linings comprising a plurality of liners 7 in which air holes 8 are formed. In use, a spray of fuel 9 is injected through the nozzle 5 and a flow 11 of cooling air flows from the compressor outlet 3. Swirling, turbulent air flows 10 are produced in the combustion chamber through the air swirler 6 and the air holes 8.

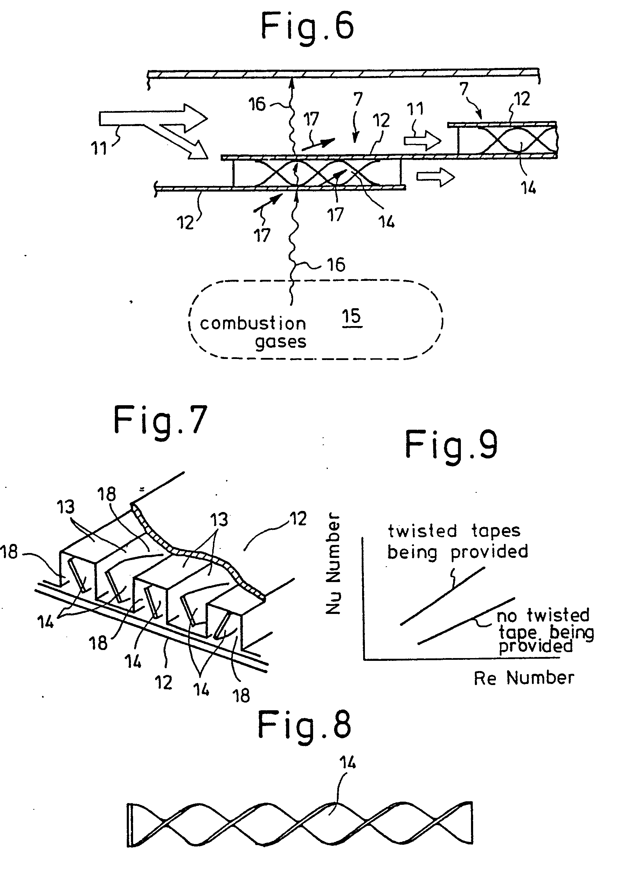

As best seen in Figures 6 to 8, each liner comprises substantially parallel outer and inner liner walls 12 between which is a plate 13 bent or corrugated into square wave shape whereby those portions of the plate which extend perpendicular to the plates 12 extend parallel to one another and divide the space between the walls 12 into a plurality of substantially square spaces or channels 18. Each space 18 accommodates a tape or band 14, e.g. of ductile heat resilient metal or composite material, which is twisted into spiral or helical shape. The width of the tape 14 is a substantial proportion, e.g. over 50% of the width and height of the spaces 18 and it is preferred that the tape contacts all the walls defining the space 18 in which it is accommodated. It is preferred that the shape of the tape is circular when viewed in the direction of its length.

In operation, heat is transferred from the hot combustion gases 15 to the lining by radiation, indicated by the numeral 16, and by convection indicated by the arrow 17. Heat is also transferred from the lining to the casing by radiation 16. The cooling air flowing from the outlet 3 of the compressor flows through the spaces 18 defined by the liner walls 12 and the partition walls 13 thereby cooling the liner walls 12. By virtue of the helical tape 14 in each space 18, the cooling air is caused to rotate or swirl thereby promoting the heat transfer by convection. As mentioned above, the liner walls 12 are heated by the heat radiated and convected from the combustion gases 15, but the heat transferred to the liner walls 12 is dissipated by the convection of the air. The remarkable improvement in the cooling effect due to the presence of the twisted tapes 14 is apparent from Figure 9 in which the Reynolds' number (Re) is plotted along the abscissa while the Nusselt number (Nu) is plotted along the ordinate. It will be seen that at the same Re number, the Nu number obtained when the twisted tapes 14 are provided is greater than that obtained when no twisted tapes are provided. It is thus apparent that the cooling efficiency is improved by the provision of the twisted tapes 14.

In addition, the twisted tapes 14 function as radiating bodies so that the heat radiated from the liner walls 12 to the twisted tapes 14 can be dissipated by convectional heat transfer and the cooling efficiency is thus further enhanced.

Whilst the present invention has been described above in conjunction with a gas turbine it is to be understood that the present invention may be equally applied to analogous items such as jet engine afterburners.

In the construction of the present invention the heat transfer rate is increased so that a smaller quantity of cooling air is required as compared with conventional constructions. As a result, in the case of gas turbine combustion chambers, the combustion gases can be raised to a higher temperature whereby the load of the gas turbine can be increased. Since positive convection cooling is employed, uniform cooling hitherto unattainable by the film cooling method can be attained and furthermore the temperature of the liner walls can be reduced so that their service life is increased. Since a smaller quantity of cooling air is required, its tendency to extinguish the flames of the combustion gases at positions adjacent the inner surface of the liner walls is reduced so that the discharge of pollutants such as CO and THC is decreased and the combustion efficiency increased. As a result, energy consumption is reduced. Finally, use of the present invention permits the load of a gas turbine to be increased so that the length of the combustion chamber can be reduced. As a result, the weight of the engine including the weight of the combustion casing can be considerably reduced.

**Claims**

1. A liner structure for use in a gas turbine combustion chamber, a jet engine afterburner or the like including two spaced liner walls (12) between which, in use, cooling air flows, the space between the liner walls (12) being divided into spaces (18) of substantially rectangular section by partitions (13), characterised in that each space (18) accommodates a helical formation comprising a twisted rectangular tape or band (14) whereby air flowing along the length of the space (18) is caused to swirl.

2. A structure as claimed in claim 1, characterised in that a plurality of liner walls (12) are provided in partially overlapping relationship, each liner wall (12) overlapping part of the length of one adjacent liner wall (12) and being spaced from it, the space between each overlapping pair of liner walls (12) being divided into spaces (18) by partitions (13) each space (18) accommodating a helical formation comprising a twisted rectangular tape or band (14).

3. A structure as claimed in claim 1 or 2 characterised in that, all the partition walls between the or each pair of liner walls (12) are connected together and form part of a single plate or sheet (13).

**Patentansprüche**

1. Mantelstruktur zur Verwendung in der Brennkammer einer Gasturbine, einem Strahltriebwerknachbrenner o.dgl. mit zwei voneinander beabstandeten Mantelwänden (12), zwischen denen im Betrieb Kühlungsluft strömt, wobei der Raum zwischen den Mantelwänden (12) in Räume (18) von im wesentlichen rechteckigem Querschnitt durch Wände (13) unterteilt ist, dadurch gekennzeichnet, dass jeder Raum (18) ein schraubenförmiges Gebilde aufnimmt, das einen gedrallten rechteckigen Streifen oder ein Band (14) aufweist, wodurch entlang der Länge des Raumes (18) strömende Luft verwirbelt wird.

2. Struktur nach Anspruch 1, dadurch gekennzeichnet, dass eine Vielzahl von Mantelwänden (12) vorgesehen sind, die sich teilweise überlappen, wobei jede Mantelwand (12) einen Teil der Länge einer benachbarten Mantelwand (12) überlappt und davon beabstandet ist, der Raum zwischen jedem überlappenden Paar von Mantelwänden (12) durch Wände (13) in Räume (18) unterteilt ist, und jeder Raum (18) ein schraubenförmiges Gebilde aufnimmt, das einen verdrallten rechteckigen Streifen oder ein Band (14) aufweist.

3. Struktur nach Anspruch 1 oder 2, dadurch gekennzeichnet, dass alle Verteilerwände zwischen dem oder jedem Paar von Mantelwänden (12) miteinander verbunden sind und ein Teil einer einzelnen Platte oder Folie (13) bilden.

**Revendications**

1. Structure de chemise destinée à être utilisée dans une chambre de combustion de turbine à gaz, un brûleur de post-combustion de moteur à réaction ou analogue, comprenant deux parois de chemise espacées (12) entre lesquelles circule, en cours d'utilisation, de l'air de refroidissement, l'espace compris entre les parois de chemise (12) étant divisé, par des cloisons de séparation (13), en espaces (18) de section sensiblement rectangulaire, structure caractérisée en ce que chaque espace (18) reçoit un dispositif hélicoïdal constitué par un ruban ou une bande rectangulaire torsadée (14) de façon que l'air s'écoulant suivant la longueur de l'espace (18) soit entraîné en tourbillonnement.

2. Structure selon la revendication 1, caractérisée en ce qu'on utilise un certain nombre de parois de chemise (12) dans une disposition en recouvrement partiel, chaque paroi de chemise (12) recouvrant une partie de la longueur d'une paroi de chemise adjacente (12) et se trouvant espacée de celle-ci, l'espace compris entre chaque paire de parois de chemise en recouvrement (12) étant divisé en espaces (18) par des cloisons de séparation (13) et chaque espace (18) recevant un dispositif hélicoïdal constitué par un ruban ou bande rectangulaire torsadés (14).

3. Structure selon l'une quelconque des revendications 1 et 2, caractérisée en ce que toutes les parois de séparation entre la paire ou chaque paire de parois de chemise (12), sont reliées ensemble et font partie d'une plaque ou feuille unique (13).

# Fig.1

combustion gases  $\underline{d}$

# Fig.2

combustion  $\underline{d}$  gases

# Fig.3

# Fig.4

Fig. 5

## Fig.6

## Fig.7

## Fig.9

twisted tapes
being provided

no twisted
tape being
provided

Nu Number

Re Number

## Fig.8